# FASCICULE DE BREVET EUROPEEN

(11) **EP 3 537 107 B1**
(45) Date de publication et mention de la délivrance du brevet: **08.04.2026**
(21) Numéro de dépôt: 19160462.8
(22) Date de dépôt: 04.03.2019
(51) Int. Cl.: G01C 23/00

(54) **TERMINAL D'OPÉRATEUR D'UN SYSTÈME AVIONIQUE DE PILOTAGE D'UN AÉRONEF**
BEDIENERTERMINAL EINES FLUGZEUGSYSTEMS ZUM LENKEN EINES LUFTFAHRZEUGS
OPERATOR TERMINAL OF AN AVIONICS SYSTEM FOR PILOTING AN AIRCRAFT

(30) Priorité: 06.03.2018 FR 1800195
(43) Date de publication de la demande: 11.09.2019
(73) Titulaire: Thales, 92400 Courbevoie (FR)
(72) Inventeur: CAMUS, Fabien, 33700 Merignac (FR); REGNAULT, Olivier, 33700 Merignac (FR); GUERRINI, Gilles, 33700 Merignac (FR)
(74) Mandataire: Lavoix

(56) Documents cités:
- EP-A1- 1 626 251
- EP-A2- 1 245 929
- WO-A1-2008/065120
- US-B1- 9 310 222

## Description

La présente invention concerne un terminal d'opérateur d'un système avionique de pilotage d'un aéronef et un procédé d'affichage d'informations associé, dans le cadre de missions complexes.

L'invention se situe dans le domaine de la sécurisation du pilotage d'aéronef, et trouve notamment une application dans le domaine des systèmes de conduite de vol et de guidage d'un aéronef effectuant une mission.

Le terme aéronef désigne de manière générale toute plateforme adaptée à voler, avec pilote à bord ou de manière télécommandée, sans pilote à bord, par exemple un avion, un hélicoptère ou un drone.

Une mission d'aéronef peut être militaire, dans le cadre d'opérations tactiques, ou civile, par exemple une mission d'approvisionnement ou une mission de recherche et de sauvetage en mer. A la différence d'un vol planifié pour un aéronef de ligne, pour lequel le pilotage est guidé par un système avionique pour suivre une trajectoire préalablement calculée, les missions affectées aux aéronefs susceptibles d'intégrer l'invention sont constituées d'une séquence de phases de tâches de natures diverses.

Pour chacune des phases de mission, l'équipage utilise des informations d'environnement de nature différente. Le terme équipage désigne ici la ou les personnes responsables du pilotage de l'aéronef.

On connaît à l'heure actuelle divers systèmes appelés systèmes de mission, qui interagissent avec un système de gestion de vol (ou FMS pour « Flight Management System »). De tels systèmes de mission utilisent des informations fournies par des capteurs embarqués et fournissent au FMS les contraintes dont il a besoin pour calculer une trajectoire considérée optimale à destination de l'équipage ou du système de pilotage automatique. De tels systèmes de mission sont très complexes et utilisent un très grand nombre d'informations, et l'équipage n'est pas informé dans le détail du calcul effectué. Par conséquent, il est difficile pour le pilote de connaître les éléments qui ont été à l'origine du calcul de la trajectoire, et d'en comprendre la construction. Par conséquent, le pilote ne peut pas non plus évaluer la marge dont il dispose pour suivre la trajectoire qui lui est proposée.

D'autres systèmes de mission permettent l'affichage de très nombreuses informations, mais un tel affichage est très chargé et son interprétation est complexe, alors que lors d'un vol de mission, l'équipage doit prendre des décisions très rapidement. Un affichage surchargé augmente la charge mentale du ou des pilotes et ne favorise pas une conduite de vol sécurisée.

La demande de brevet WO 2008/065120 A1 décrit un dispositif de visualisation destiné à la compréhension de l'environnement aérien d'un aéronef, comportant un affichage de zones colorées correspondant à des niveaux de danger pour l'aéronef.

La demande de brevet EP 1 245 929 A2 décrit un dispositif d'assistance au pilotage d'aéronef comportant une présentation d'informations sur un écran de visualisation.

Il existe un besoin d'amélioration des systèmes d'informations de pilotage de mission pour aider à l'amélioration de l'acceptabilité des données issues de traitements complexes dans les systèmes avionique, de la sécurisation et de l'anticipation des risques par l'équipage.

A cet effet, l'invention propose, selon un premier aspect, un terminal d'opérateur d'un système avionique de pilotage d'un aéronef selon la revendication 1.

Le terminal d'opérateur selon l'invention peut présenter une ou plusieurs des caractéristiques des revendications dépendantes 2 à 6, prises indépendamment ou en combinaison, selon toutes les combinaisons techniquement acceptables.

Selon un autre aspect, l'invention concerne un système avionique de pilotage d'un aéronef adapté pour une utilisation lors d'une mission selon la revendication 7.

Selon un autre aspect, l'invention concerne un procédé d'affichage mis en œuvre par un terminal d'opérateur d'un système avionique de pilotage d'un aéronef selon la revendication 8.

Selon un mode de réalisation le procédé d'affichage comprend une ou plusieurs des caractéristiques des revendications dépendantes 9 à 11.

D'autres caractéristiques et avantages de l'invention ressortiront de la description qui en est donnée ci-dessous, à titre indicatif et nullement limitatif, en référence aux figures annexées, parmi lesquelles :
- la figure 1 est un vue schématique d'un système avionique selon un mode de réalisation de l'invention ;
- la figure 2 est une illustration schématique d'une vue d'affichage selon un premier mode d'affichage ;
- la figure 3 est une illustration schématique d'une vue d'affichage selon un deuxième mode d'affichage ;
- la figure 4 est un logigramme des principales étapes d'un procédé d'affichage selon un mode de réalisation.

L'invention sera décrite dans un mode de réalisation d'un système avionique d'affichage d'informations de pilotage d'un aéronef, comprenant un terminal d'opérateur embarqué à bord de l'aéronef.

En variante, le système avionique est distribué entre le bord et le sol, et le terminal d'opérateur est dans un centre de commande au sol.

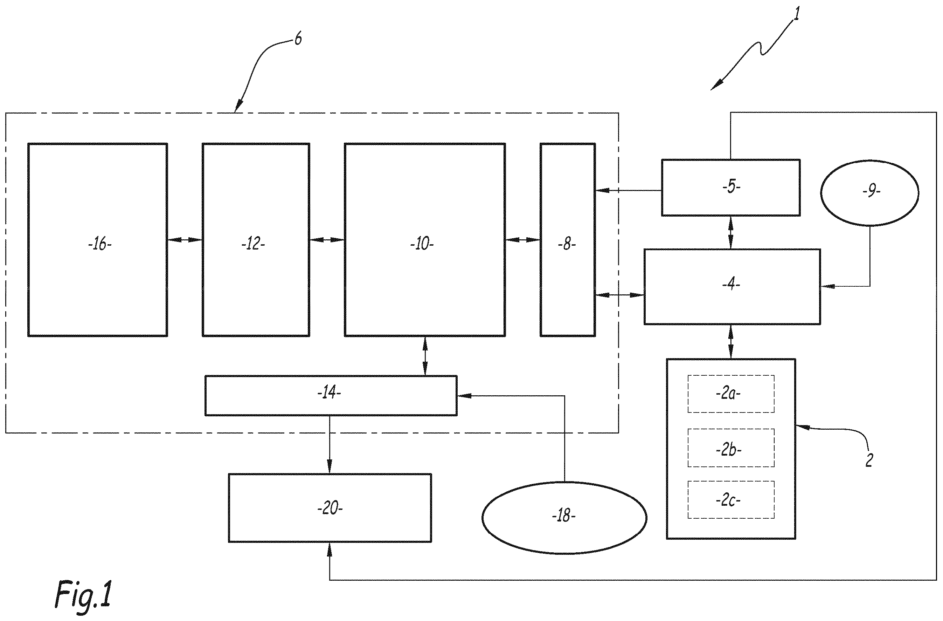

Un exemple de système avionique 1 selon l'invention est illustré à la figure 1.

Ce système avionique 1 permet un pilotage amélioré en mission d'un aéronef non représenté.

Le système 1 comprend une pluralité 2 de capteurs 2a, 2b, 2c embarqués sur l'aéronef, ces capteurs étant par exemple des radioaltimètres, des capteurs de prises de vue dans différentes bandes spectrales (visible, infrarouge proche, ...), des capteurs radio, des radars de surveillance, de combat, disposant de modes d'imagerie ou météo. Il est entendu que les capteurs 2a, 2b, 2c sont représentés uniquement à titre d'exemple, et qu'un nombre quelconque de capteurs est utilisable.

Ces capteurs sont adaptés à transmettre des données relatives à l'environnement de l'aéronef au moment où le vol est effectué, à un système de mission 4, et, en complément optionnel, directement à un terminal d'opérateur 6 via un module de communication 8 de ce terminal d'opérateur.

L'opérateur de ce terminal est dans cet exemple le pilote de l'aéronef.

Le module de communication 8 est par exemple un module de communication filaire, et dans ce cas les données transmises par les capteurs 2 sont transmises par cette liaison filaire, selon un protocole de communication adéquat.

En variante, le module de communication 8 est adapté à communiquer selon un protocole de communication radio, éventuellement sécurisé par des procédés de chiffrement.

Le système 1 comporte également un système de gestion de vol ou FMS 5, qui coopère avec le système de mission 4 et génère une trajectoire de référence de l'aéronef, notée T_{Ref}, en fonction notamment des informations fournies par les capteurs 2.

En plus, des informations complémentaires 9, transmises par un moyen de communication radio en provenance d'un centre de commande ou d'une autre unité (quelle que soit sa situation : aéroportée, au sol, en surface...) sont également reçues et utilisées.

Le terminal d'opérateur 6 peut soit être embarqué à bord du porteur, soit être situé dans un centre de contrôle et de commande au sol. Il comporte une unité centrale de traitement 10, ou CPU, par exemple un processeur électronique, apte à exécuter des instructions de programme informatique lorsque le terminal 6 est mis sous tension, un ou plusieurs modules d'affichage 12, et une interface homme-machine (IHM) 14 de saisie des commandes d'un opérateur, qui est par exemple un module de saisie de commandes tactiles. En variante, l'interface 14 de saisie de commandes est intégrée avec un écran d'affichage tactile 12.

Il comporte également une unité de mémoire électronique 16 adaptée pour stocker des données et des instructions de code exécutable.

Les blocs fonctionnels 8, 10, 12, 14 et 16 sont interconnectés, par exemple via un bus de communication.

Un plan de mission comportant plusieurs phases de mission est généralement élaboré avant la mission, et est reçu par le système de mission 4 soit par une liaison de données, soit par un moyen de transfert de fichier (de type carte mémoire, voire clé USB).

Le terminal d'opérateur 6 est adapté à recevoir des commandes de mission 18, via l'interface 14 de saisie de commandes. Par exemple, les commandes 18 permettent à un opérateur, pilote de l'aéronef, d'effectuer des choix tactiques ou de commander l'initialisation d'un type de mission ou un changement de phase de mission.

Un choix tactique correspond par exemple à un choix d'une alternative parmi plusieurs propositions du système (éviter ou engager une menace, par exemple, ou bien choix d'une trajectoire parmi des propositions correspondant à différents profils-types de pilotes). Un changement de phase de mission peut s'effectuer automatiquement, par exemple lorsque l'aéronef atteint un point prédéfini, ou sur commande du pilote. Par exemple, si la phase de mission courante consiste à chercher un navire en difficulté, le pilote peut demander le changement de phase de mission lorsque le navire recherché aura été trouvé.

Un plan de mission comporte plusieurs phases, qui sont choisies par exemple par l'opérateur parmi un ensemble de phases prédéterminées.

Par exemple, on distingue plusieurs phases :
- A) phase de transit, durant laquelle l'aéronef se déplace entre un point A et un point B ;
- B) phase de recherche et d'observation, pendant laquelle l'aéronef effectue une observation d'une zone de recherche, à parcourir selon un motif de parcours donné ;
- C) phase de vol stationnaire, durant laquelle l'aéronef doit se positionner au-dessus d'une zone cible, et conserver la position courante ;
- D) phase de largage de fret, durant laquelle il s'agit de déterminer une zone de largage appropriée et de maintenir l'aéronef dans cette position.

Bien entendu, la liste de phases de mission A), B), C) D) donnée ci-dessus n'est pas exhaustive.

Chaque phase de mission correspond à un objectif spécifique, et par conséquent des contraintes de vol différentes peuvent s'appliquer selon le type de phase de mission courante.

Dans un mode de réalisation avantageux, le type d'affichage de la trajectoire de l'aéronef sur un module d'affichage 12 du terminal d'opérateur 6 est choisi en fonction de la phase de mission, comme expliqué en détail ci-après. Ainsi, l'affichage le plus adéquat par rapport aux objectifs de la phase de mission et aux contraintes associées est choisi.

Dans le mode de réalisation illustré le terminal d'opérateur 6 est connecté à un dispositif de pilotage 20 de l'aéronef. Ce dispositif de pilotage 20 est adapté à recevoir des consignes de guidage du terminal d'opérateur 6 et à les appliquer, de manière connue, pour modifier la trajectoire de l'aéronef, en fonction zones d'accessibilité définies en fonction de contraintes associées aux phases de mission.

En particulier, le terminal d'opérateur selon l'invention est adapté à prévenir le pilote (par exemple par une levée d'alerte) s'il existe un risque jugé significatif que l'une des contraintes associées à la phase de mission courante ne soit pas respectée.

Le dispositif de pilotage 20 intègre, dans un mode de réalisation, un dispositif de pilotage automatique.

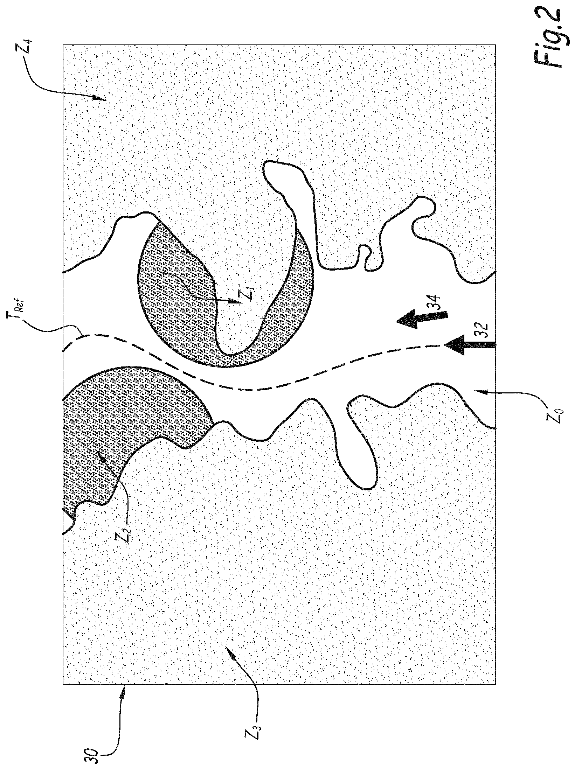

La figure 2 illustre schématiquement une fenêtre d'affichage 30 d'un module d'affichage 12 du terminal d'opérateur 6.

Dans cette fenêtre 30 est affichée, dans un premier mode d'affichage qui est le mode d'affichage vertical, en vue de dessus du terrain survolé, la trajectoire de référence T_{Ref} de l'aéronef fournie par le FMS 5.

L'affichage comprend un premier symbole graphique 32, qui est une flèche dans cet exemple, indiquant la position courante POS de l'aéronef piloté et la direction de vol de l'aéronef.

De plus, l'affichage comprend, de façon optionnelle et selon la situation, également un deuxième symbole graphique 34, qui est une également flèche dans cet exemple, indiquant la position courante POS_E d'un deuxième aéronef, équipier accompagnateur de l'aéronef piloté, et la direction de vol de ce deuxième aéronef. Le cas échéant, les positions de plusieurs aéronefs accompagnateurs sont affichées.

Plusieurs zones d'accessibilité Z₀, Z₁, Z₂, Z₃, Z₄ sont affichées, la trajectoire de référence T_{Ref} ayant une intersection avec au moins une des zones affichées, les autres zones étant situées devant la position courante de l'aéronef, et contenues dans la zone (dont l'étendue est réglable par l'opérateur) sur laquelle porte l'attention du pilote. Plusieurs zones sont représentées, correspondant aux zones où sont applicables, aux alentours de l'altitude courante de l'aéronef, les différents types de contraintes présentes à proximité de la trajectoire de référence et de la position courante de l'aéronef (par exemple : les zones dans lesquelles le terrain est proche du niveau de vol courant de l'aéronef ou la portée des systèmes d'arme ennemis connus).

Les zones d'accessibilité affichées sont des zones bidimensionnelles dans ce premier mode d'affichage, mais correspondent à des zones tridimensionnelles.

Par proximité spatiale, on entend ici que la distance considérée est inférieure à l'incertitude de positionnement relatif des deux éléments considérés.

Le niveau d'accessibilité est choisi parmi un ensemble prédéfini de niveaux d'accessibilité, au moins égal à 2 : accessible et inaccessible.

Le niveau d'accessibilité d'une zone accessible est supérieur au niveau d'accessibilité d'une zone inaccessible.

En variante, plusieurs niveaux d'accessibilité, incluant également des niveaux d'accessibilité intermédiaire, sont également définis.

Par exemple, les zones accessibles sont des zones pour lesquelles la distance à tout obstacle (relief ou autre) est considérée suffisante, il n'y a pas de turbulence importante et aucun autre danger important relatif à la phase de mission courante n'a été détecté.

Par exemple, des zones inaccessibles sont des zones d'obstacle (terrain ou risque de collision avec autre aéronef), des zones de turbulences météorologiques qui empêchent le fonctionnement adéquat d'instruments de bord.

Le niveau d'accessibilité est calculé à partir de contraintes associées à la phase de mission, le calcul étant effectué en fonction de la phase de mission.

Bien entendu, l'affichage est mis à jour dynamiquement à des intervalles temporels réguliers, par exemple toutes les 40 ms ce qui permet de prendre en compte l'environnement de l'aéronef, les commandes de l'opérateur et un éventuel changement de phase de mission.

Les zones d'accessibilité ont une caractéristique visuelle, par exemple le motif ou la couleur, en lien avec le niveau d'accessibilité. Par exemple, chaque niveau d'accessibilité prédéterminé a une couleur associée, ce qui permet à l'opérateur de distinguer très aisément les zones accessibles des zones interdites.

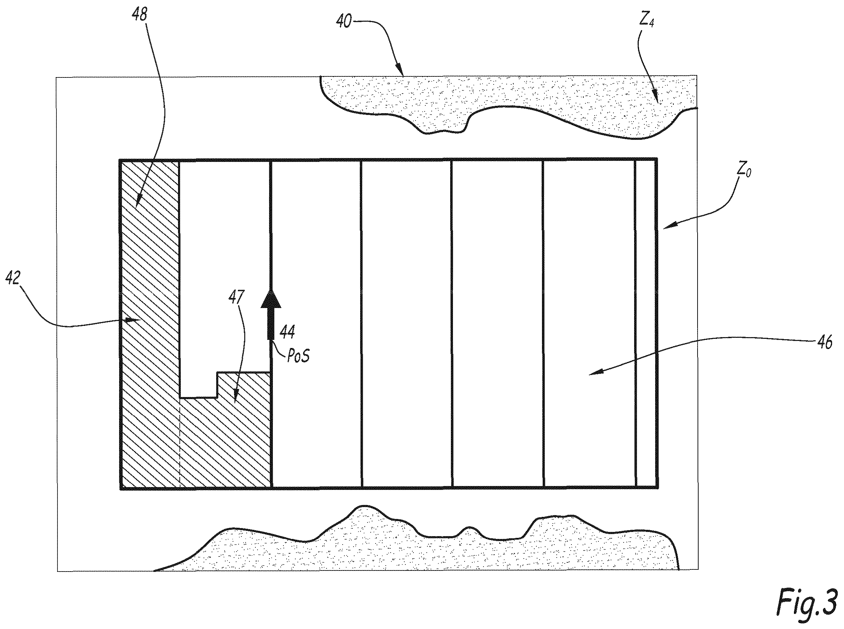

La figure 3 illustre schématiquement une fenêtre d'affichage 40 d'un module d'affichage 12 du terminal d'opérateur 6.

L'affichage de la figure 3 est un deuxième mode d'affichage adapté notamment pour une phase de recherche et d'observation (phase B) selon un motif de parcours donné.

L'affichage comprend une sous-fenêtre 42 qui indique le périmètre de recherche à survoler, et un premier symbole graphique 44, qui est une flèche dans cet exemple, indiquant la position courante POS de l'aéronef piloté et la direction de vol de l'aéronef.

Le périmètre de recherche 42 est divisé en portions 46 à observer, et on affiche également, avec un motif d'affichage choisi, la ou les portions 48 déjà vérifiées.

En complément, on affiche également, avec un motif d'affichage choisi, la zone 47 en cours de parcours et qui se situe dans le périmètre de capture des capteurs embarqués 2.

Ainsi, l'opérateur a une vision très claire de la portion de zone de recherche déjà parcourue et des portions restant à parcourir, et dispose donc de tous les éléments nécessaires à la conduite du vol à court terme.

De plus, en superposition sur la fenêtre d'affichage 40 sont affichées les zones d'accessibilité Z₀, Z₄, qui sont respectivement dans cet exemple une zone accessible Z₀ et une zone inaccessible Z₄.

De même que dans le mode de réalisation de la figure 2, les zones d'accessibilité affichées ont une caractéristique visuelle, par exemple le motif ou la couleur, en lien avec le niveau d'accessibilité.

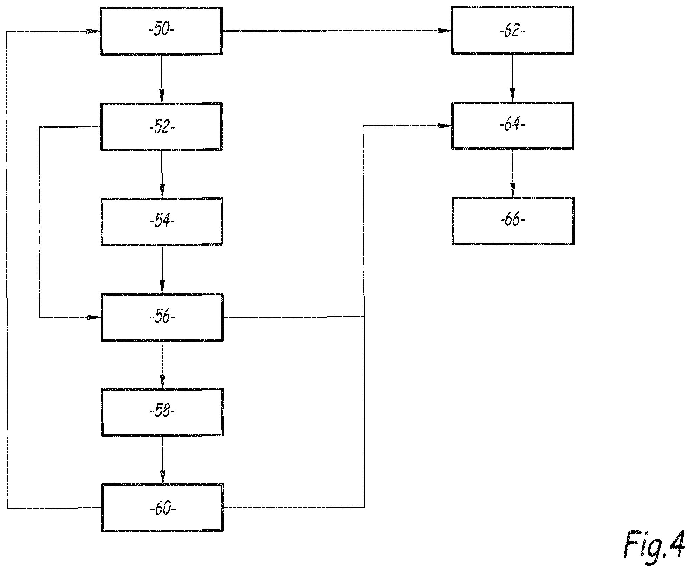

La figure 4 est un logigramme des principales étapes d'un procédé d'affichage pour l'aide au pilotage de mission d'un aéronef selon un mode de réalisation de l'invention.

Une première étape 50 d'obtention du plan de mission et de la phase de mission courante est mise en œuvre. Par exemple, c'est l'opérateur qui indique, via l'interface homme-machine, le type de mission et la phase de mission courante. En variante, après indication du type de mission, la phase de mission courante est mise à jour automatiquement, chaque type de mission ayant un enchaînement de phases de mission associées (plan de mission) qui est préalablement enregistré.

Les données d'environnement sont obtenues à l'étape d'obtention de données d'environnement 52. Les données d'environnement comprennent des données fournies par les capteurs embarqués, notamment les données de position de l'aéronef dans un référentiel de géolocalisation, et des données fournies par les instruments de navigation, en particulier des données relatives à la dynamique courante de l'aéronef, comprenant notamment : la vitesse verticale, l'accélération verticale, la vitesse courante de l'air, le cap. Les capteurs embarqués fournissent aussi des informations (ou paramètres) sur l'environnement, en particulier au sujet des autres unités présentes sur le théâtre d'opérations. Bien entendu, d'autres paramètres mesurés pour l'aide au pilotage d'aéronef sont aussi utilisables.

En complément, des informations reçues d'un centre de commande au sol et utiles pour le pilotage complètent les données d'environnement, par exemple des informations relatives à d'autres aéronefs situés à proximité.

Ces paramètres sont, de manière connue, fournis à système de mission, qui en extrait les contraintes applicables à la conduite du vol (en fonction de l'état d'avancement du plan de mission et de l'état des systèmes embarqués). Le FMS utilise ces contraintes pour calculer une trajectoire de référence T_{Ref} de l'aéronef, obtenue à l'étape 54.

A l'étape suivante 56 est déterminée une enveloppe tridimensionnelle Env_AR d'une trajectoire prédite à court terme, en fonction de l'état (position et dynamique) de l'aéronef, de la trajectoire de référence T_{Ref}, des données relatives à la dynamique courante et de l'état des commandes.

On entend ici par dynamique de l'aéronef ses caractéristiques de vecteur de vitesse et d'accélération

En effet, lorsque le pilote automatique n'est pas utilisé et que le pilote vole manuellement, ou que des éléments externes (en particulier le vent) font dévier l'aéronef, ce dernier ne suit pas exactement la trajectoire de référence T_{Ref} calculée par le FMS.

L'enveloppe tridimensionnelle Env_AR est un volume entourant la trajectoire prédite calculée, dans lequel on considère que l'aéronef a une probabilité significative d'évoluer (ce niveau de probabilité correspond au taux de non-détection de situations dangereuses acceptable dans le cadre de la mission).

Cette enveloppe Env_AR est discrétisée à l'étape 56, par exemple elle est modélisée par un ensemble de nœuds Nᵢ, chaque nœud Nᵢ étant défini par un triplet (Xᵢ, Yᵢ, Zᵢ) de coordonnées dans un référentiel spatial tridimensionnel.

Pour chaque nœud Nᵢ, on obtient ensuite à l'étape 58 un ensemble de contraintes applicables associées. Les contraintes applicables se classent en deux catégories :
- les contraintes impératives, applicables de façon absolue et binaire : elles sont caractérisées par des zones qui sont absolument inaccessibles dans un contexte de mission donné ;
- les contraintes relatives, dont l'importance s'apprécie en fonction de la phase de mission courante et des autres contraintes applicables, par exemple les volumes de détection des capteurs ennemis connus.

Dans la catégorie des contraintes impératives, il y a par exemple les contraintes d'évitement d'obstacle, par exemple en fonction du terrain (relief, bâtiments) ou en fonction de la présence d'autres aéronefs.

Dans la catégorie des contraintes relatives, il y a par exemple la présence de turbulences météorologiques : un type de turbulence localisé donné peut avoir plus d'impact dans une phase de vol stationnaire ou de largage de fret que dans une phase de transit.

Certaines contraintes peuvent n'être prises en considération que pour certaines phases de mission. En variante, toutes les contraintes relatives sont prises en considération à chaque phase de mission, mais avec un coefficient de pondération associé, qui peut être égal à zéro pour certaines phases de mission.

Par exemple, à chaque nœud Nᵢ on associe un vecteur de contraintes, dont les valeurs sont calculées en fonction des informations reçues.

Les contraintes associées à un nœud sont calculées en fonction de la position spatiale du nœud par rapport à une zone, par exemple l'altitude par rapport au terrain, la position par rapport à une zone de nuages ou la situation par rapport à une sphère estimée de danger par rapport à une unité ennemie.

On calcule ensuite à l'étape 60 une valeur synthétique des différentes contraintes applicables à un même nœud, par exemple en utilisant une somme pondérée. Cette valeur synthétique représente le niveau d'accessibilité (ou, inversement, de danger) associé à la position géographique correspondant au nœud considéré.

De plus, des zones d'accessibilité ayant un même niveau d'accessibilité sont calculées.

Le niveau des différentes contraintes applicables aux alentours de la position de l'aéronef et de la trajectoire de référence sont affichés lors d'une étape d'affichage 64, en superposition de la trajectoire de référence.

Optionnellement, l'étape 62 consiste à déterminer le mode d'affichage le plus approprié à la tâche courante et à la nature des contraintes environnantes.

Par exemple : si la tâche courante consiste à naviguer en formation, le système affichera une vue de dessus représentant la position des membres de la formation et la trajectoire de référence. En revanche, si l'aéronef doit rechercher un navire dans une zone, le système représentera la zone de recherche, les zones dans lesquelles la recherche a été effectuée, et un ensemble de segments de trajectoire dont le vol permet d'effectuer la recherche de façon optimale. Dans les deux cas, le système représentera aussi les différentes contraintes externes susceptibles d'influencer la conduite du vol, comme décrit précédemment.

D'autre part, le système alerte le pilote (étape 66) lorsqu'il devient probable que l'une des contraintes de mission ne sera pas respectée : si l'enveloppe autour de la trajectoire prédite contient un nœud dont le niveau d'accessibilité synthétique est trop faible, donc inférieur à un seuil prédéterminé, ou un nœud où une contrainte impérative est active (par exemple : la position géographique correspondante se trouve sous le niveau du sol), alors le pilote est alerté et la contrainte ou la zone problématique est caractérisée sur le module d'affichage du système par une information destinée au pilote.

De préférence, l'alerte est matérialisée sur le module d'affichage de manière à attirer l'attention de l'opérateur immédiatement, par exemple par un affichage clignotant. En complément, une alerte sonore est également levée.

L'opérateur peut alors exécuter des manœuvres d'évitement, et grâce à l'affichage d'indications, il dispose d'informations pour effectuer des choix tactiques.

## Revendications

1. Terminal d'opérateur d'un système avionique de pilotage d'un aéronef, adapté pour une utilisation lors d'une mission définie par un plan de mission comportant une pluralité de phases de mission, chaque phase de mission correspondant à au moins une tâche à effectuer, le terminal d'opérateur (6) comprenant au moins un module d'affichage (12) et un dispositif de calcul (10), mettant en œuvre un système de gestion de vol adapté à déterminer une trajectoire de référence (T_{Ref}) dudit aéronef en intégrant au moins une contrainte d'environnement,
adapté à afficher sur ledit module d'affichage (12) une position courante de l'aéronef,
**caractérisé en ce qu'**il est adapté à afficher sur ledit module d'affichage (12) ladite trajectoire de référence (T_{ref}) et une pluralité de zones d'accessibilité (Z₀, Z₁, Z₂, Z₃, Z₄), au moins une desdites zones d'accessibilité ayant une intersection avec ladite trajectoire de référence, chacune desdites zones d'accessibilité ayant un niveau d'accessibilité associé, parmi au moins deux niveaux d'accessibilité de manière à définir des zones accessibles et des zones inaccessibles pour une phase de mission courante, les zones d'accessibilité ayant une caractéristique visuelle en lien avec le niveau d'accessibilité,
le niveau d'accessibilité étant défini en fonction de la phase de mission courante, d'une trajectoire prédite à partir de la trajectoire de référence et d'au moins deux contraintes de vol associées à la phase de mission courante,
lesdites contraintes de vol associées à la phase de mission courante comportant au moins une contrainte impérative et au moins une contrainte relative associée à la phase de mission courante.

2. Terminal d'opérateur selon la revendication 1, **caractérisé en ce que** l'affichage est effectué selon un mode d'affichage choisi entre un premier mode d'affichage et un deuxième mode d'affichage en fonction de la phase de mission courante.

3. Terminal d'opérateur selon la revendication 1 ou 2, **caractérisé en ce que** chaque zone d'accessibilité (Z₀, Z₁, Z₂, Z₃, Z₄) a une caractéristique d'affichage associée représentative du niveau d'accessibilité.

4. Terminal d'opérateur selon l'une des revendications 1 à 3, **caractérisé en ce que** l'affichage comporte également un premier symbole graphique (32), indiquant une position courante de l'aéronef piloté et une direction de vol de l'aéronef, et au moins un deuxième symbole graphique (34), indiquant une position d'un deuxième aéronef.

5. Terminal d'opérateur selon l'une des revendications 1 à 4, **caractérisé en ce que** l'affichage comporte un affichage d'alerte lorsque la trajectoire prédite traverse une zone de niveau d'accessibilité inférieur à seuil prédéterminé.

6. Terminal d'opérateur selon l'une des revendications 1 à 5, **caractérisé en ce que** l'affichage est rafraîchi dynamiquement à des intervalles temporels réguliers.

7. Système avionique de pilotage d'un aéronef adapté pour une utilisation lors d'une mission comportant une pluralité de phases de mission, le système avionique comportant un terminal d'opérateur (6) connecté à un dispositif de pilotage (20) de l'aéronef, **caractérisé en ce que** ledit terminal d'opérateur est conforme à l'une des revendications 1 à 6.

8. Procédé d'affichage mis en œuvre par un terminal d'opérateur d'un système avionique de pilotage d'un aéronef, adapté pour une utilisation lors d'une mission définie par un plan de mission comportant une pluralité de phases de mission, chaque phase de mission correspondant à une tâche à effectuer, le terminal d'opérateur comprenant au moins un module d'affichage et un dispositif de calcul, mettant en œuvre un système de gestion de vol adapté à déterminer une trajectoire de référence dudit aéronef en intégrant au moins une contrainte d'environnement,
**caractérisé en ce qu'**il comporte des étapes de :
- calcul (56) d'une trajectoire prédite de l'aéronef en fonction de ladite trajectoire de référence, et calcul d'une pluralité de zones d'accessibilité, au moins une desdites zones d'accessibilité ayant une intersection avec ladite trajectoire de référence, chacune desdites zones d'accessibilité ayant un niveau d'accessibilité associé parmi au moins deux niveaux d'accessibilité de manière à définir des zones accessibles et des zones inaccessibles pour une phase de mission courante, les zones d'accessibilité ayant une caractéristique visuelle en lien avec le niveau d'accessibilité,
le niveau d'accessibilité étant défini en fonction de la phase de mission courante et d'au moins deux contraintes de vol associées à la phase de mission courante, lesdites contraintes de vol associées à la phase de mission courante comportant au moins une contrainte impérative et au moins une contrainte relative associée à la phase de mission courante,
- affichage (64) sur un module du terminal d'opérateur de la trajectoire de référence, d'une position courante de l'aéronef et desdites zones d'accessibilité.

9. Procédé selon la revendication 8, dans lequel le calcul de zones d'accessibilité comprend des étapes de :
- calcul (56) d'une enveloppe tridimensionnelle de la trajectoire prédite, et obtention d'une pluralité de nœuds représentatifs de ladite enveloppe,
- pour chaque nœud, obtention (58) d'une pluralité de contraintes associées, en fonction de la phase de mission courante, et calcul (60) d'un niveau d'accessibilité par une somme pondérée par des coefficients de pondération associés auxdites contraintes, au moins une partie des coefficients de pondération dépendant de la phase de mission courante.

10. Procédé selon la revendication 9, comportant en outre une étape d'émission d'alerte (66) si ladite enveloppe contient un nœud dont le niveau d'accessibilité calculé est inférieur à un seuil prédéterminé.

11. Procédé selon la revendication 10, dans lequel l'émission d'alerte (66) comporte un affichage sur le module d'affichage d'un indicateur d'alerte et d'une information relative à au moins une contrainte s'appliquant audit nœud.

## Patentansprüche

1. Bedienerterminal eines Avioniksystems zum Steuern eines Luftfahrzeugs, das für eine Verwendung bei einer Mission angepasst ist, die durch einen Missionsplan definiert ist, umfassend eine Vielzahl von Missionsphasen, wobei jede Missionsphase mindestens einer auszuführenden Aufgabe entspricht, das Bedienerterminal (6) umfassend mindestens ein Anzeigemodul (12) und eine Rechenvorrichtung (10), die ein Flugmanagementsystem implementiert, der angepasst ist, um eine Referenzflugbahn (T_{Ref}) des Luftfahrzeugs unter Einbeziehung mindestens einer Umgebungsbedingung zu bestimmen,
das angepasst, um auf dem Anzeigemodul (12) eine aktuelle Position des Luftfahrzeugs anzuzeigen,
**dadurch gekennzeichnet, dass** es angepasst ist, um auf dem Anzeigemodul (12) die Referenzflugbahn (T_{ref}) und eine Vielzahl von Zugänglichkeitsbereichen (Z₀, Z₁, Z₂, Z₃, Z₄) anzuzeigen, wobei mindestens einer der Zugänglichkeitsbereiche einen Schnittpunkt mit der Referenzflugbahn aufweist, wobei jeder der Zugänglichkeitsbereiche einen assoziierten Zugänglichkeitsgrad aus mindestens zwei Zugänglichkeitsgraden aufweist, um für eine aktuelle Missionsphase zugängliche und unzugängliche Bereiche zu definieren, wobei die Zugänglichkeitsbereiche ein visuelles Merkmal aufweisen, das mit dem Zugänglichkeitsgrad in Verbindung ist,
wobei der Zugänglichkeitsgrad abhängig von der aktuellen Missionsphase, einer aus der Referenzflugbahn vorhergesagten Flugbahn und mindestens zwei mit der aktuellen Missionsphase verbundenen Flugbeschränkungen definiert ist,
wobei die mit der aktuellen Missionsphase verbundenen Flugbeschränkungen mindestens eine imperative Beschränkung und mindestens eine relative Beschränkung umfassen, die mit der aktuellen Missionsphase assoziiert ist.

2. Bedienerterminal nach Anspruch 1, **dadurch gekennzeichnet, dass** die Anzeige in einem Anzeigemodus erfolgt, der abhängig von der aktuellen Missionsphase ausgewählt ist aus einem ersten Anzeigemodus und einem zweiten Anzeigemodus.

3. Bedienerterminal nach Anspruch 1 oder 2, **dadurch gekennzeichnet, dass** jeder Zugänglichkeitsbereich (Z₀, Z₁, Z₂, Z₃, Z₄) ein assoziiertes Anzeigemerkmal aufweist, das repräsentativ für den Zugänglichkeitsgrad ist.

4. Bedienerterminal nach einem der Ansprüche 1 bis 3, **dadurch gekennzeichnet, dass** die Anzeige auch ein erstes grafisches Symbol (32), das eine aktuelle Position des gesteuerten Luftfahrzeugs und eine Flugrichtung des Luftfahrzeugs angibt, und mindestens ein zweites grafisches Symbol (34), das eine Position eines zweiten Luftfahrzeugs angibt, umfasst.

5. Bedienerterminal nach einem der Ansprüche 1 bis 4, **dadurch gekennzeichnet, dass** die Anzeige eine Warnanzeige umfasst, wenn die vorhergesagte Flugbahn einen Bereich mit einem Zugänglichkeitsgrad unterhalb eines vorbestimmten Schwellenwerts durchquert.

6. Bedienerterminal nach einem der Ansprüche 1 bis 5, **dadurch gekennzeichnet, dass** die Anzeige dynamisch in regelmäßigen Zeitintervallen aufgefrischt wird.

7. Avioniksystem zum Steuern eines Luftfahrzeugs, das zur Verwendung während einer Mission mit einer Vielzahl von Missionsphasen angepasst ist, das Avioniksystem umfassend ein Bedienerterminal (6), das mit einer Steuervorrichtung (20) des Luftfahrzeugs verbunden ist, **dadurch gekennzeichnet, dass** das Bedienerterminal einem der Ansprüche 1 bis 6 entspricht.

8. Anzeigeverfahren, das von einem Bedienerterminal eines Avioniksystems zur Steuerung eines Luftfahrzeugs implementiert wird, das zur Verwendung bei einer Mission angepasst ist, die durch einen Missionsplan definiert ist, umfassend eine Vielzahl von Missionsphasen, wobei jede Missionsphase einer auszuführenden Aufgabe entspricht, das Bedienerterminal umfassend mindestens ein Anzeigemodul und eine Rechenvorrichtung, die ein Flugmanagementsystem implementiert, das angepasst ist, um eine Referenzflugbahn des Luftfahrzeugs unter Einbeziehung mindestens einer Umgebungsbedingung zu bestimmen,
**dadurch gekennzeichnet, dass** es die folgenden Schritte umfasst:
- Berechnen (56) einer vorhergesagten Flugbahn des Luftfahrzeugs abhängig von der Referenzflugbahn und Berechnen einer Vielzahl von Zugänglichkeitsbereichen, wobei mindestens einer der Zugänglichkeitsbereiche einen Schnittpunkt mit der Referenzflugbahn aufweist, wobei jeder der Zugänglichkeitsbereiche einen assoziierten Zugänglichkeitsgrad von mindestens zwei Zugänglichkeitsgraden aufweist, um für eine aktuelle Missionsphase zugängliche Bereiche und unzugängliche Bereiche zu definieren, wobei die Zugänglichkeitsbereiche ein visuelles Merkmal aufweisen, das mit dem Zugänglichkeitsgrad in Verbindung ist,
wobei der Zugänglichkeitsgrad abhängig von der aktuellen Missionsphase und von mindestens zwei mit der aktuellen Missionsphase assoziierten Flugbeschränkungen definiert wird, wobei die mit der aktuellen Missionsphase assoziierten Flugbeschränkungen mindestens eine zwingende Beschränkung und mindestens eine mit der aktuellen Missionsphase assoziierte relative Beschränkung umfassen,
- Anzeigen (64), auf einem Modul des Bedienerterminals, der Referenzflugbahn, einer aktuellen Position des Luftfahrzeugs und der Zugangsbereiche.

9. Verfahren nach Anspruch 8, wobei die Berechnung von Zugänglichkeitsbereichen folgende Schritte umfasst:
- Berechnen (56) einer dreidimensionalen Hüllkurve der vorhergesagten Flugbahn und Erlangen einer Vielzahl von Knoten, die repräsentativ für die Hüllkurve sind,
- für jeden Knoten, Erlangen (58) einer Vielzahl von assoziierten Einschränkungen, abhängig von der aktuellen Missionsphase, und Berechnen (60) eines Zugänglichkeitsgrads durch eine gewichtete Summe von Gewichtungskoeffizienten, die mit den Einschränkungen assoziiert sind, wobei zumindest ein Teil der Gewichtungskoeffizienten von der aktuellen Missionsphase abhängt.

10. Verfahren nach Anspruch 9, ferner umfassend einen Schritt zum Ausgeben einer Warnung (66), wenn die Hüllkurve einen Knoten enthält, dessen berechneter Zugänglichkeitsgrad unterhalb eines vorbestimmten Schwellenwerts ist.

11. Verfahren nach Anspruch 10, wobei das Ausgeben einer Warnung (66) eine Anzeige eines Warnindikators und einer Information bezüglich mindestens einer Einschränkung, die für den Knoten gilt, auf dem Anzeigemodul umfasst.

## Claims

1. An operator terminal of an avionic system for flying an aircraft, suitable for use during a mission defined by a mission plan including a plurality of mission phases, each mission phase corresponding to at least one task to perform, the operator terminal (6) comprising at least a display module (12) and a computing device (10), implementing a flight management system suitable for determining a reference trajectory (T_{Ref}) of said aircraft by incorporating at least one environment constraint, adapted to display on said display module (12) a current position of the aircraft, **characterized in that** is suitable for displaying on said display module (12) :
said reference trajectory (T_{Ref}), and a plurality of accessibility zones (Z₀, Z₁, Z₂, Z₃, Z₄), at least one of said accessibility zones having an intersection with said reference trajectory, said accessibility zones having an associated accessibility level, between at least two accessibility levels so as to define accessible zones and non-accessible zones for a current mission phase, the accessibility zones having a visual characteristic linked with the accessibility level,
the accessibility level being defined as a function of the current mission phase, a trajectory predicted from the reference trajectory and at least two flight constraints associated with the current mission phase, said constraints associated with the current mission phase comprising at least one mandatory constraint and at least one relative constraint associated with the current mission phase.

2. The operator terminal according to claim 1, **characterized in that** the display is done according to a display mode chosen according to a first display mode and a second display mode based on the current mission phase.

3. The operator terminal according to claim 1 or 2, **characterized in that** each accessibility zone (Z₀, Z₁, Z₂, Z₃, Z₄) has an associated display characteristic representative of the accessibility level.

4. The operator terminal according to one of claims 1 to 3, **characterized in that** the display also includes a first graphic symbol (32), indicating a current position of the flown aircraft and a direction of flight of the aircraft, and at least one second graphic symbol (34), indicating a position of a second aircraft.

5. The operator terminal according to one of claims 1 to 4, **characterized in that** the display includes an alert display when the predicted trajectory crosses a zone with an accessibility level below a predetermined threshold.

6. The operator terminal according to one of claims 1 to 5, **characterized in that** the display is refreshed dynamically at regular time intervals.

7. An avionic system for flying an aircraft suitable for use during a mission including a plurality of mission phases, the avionic system including an operator terminal (6) connected to a device (20) for flying the aircraft, **characterized in that** said operator terminal is according to one of claims 1 to 6.

8. A display method implemented by an operator terminal of an avionic system for flying an aircraft, suitable for use during a mission defined by a mission plan including a plurality of mission phases, each mission phase corresponding to at least one task to perform, the operator terminal comprising at least a display module and a computing device, implementing a flight management system suitable for determining a reference trajectory of said aircraft by incorporating at least one environment constraint,
**characterized in that** it includes the following steps:
- computing (56) a predicted trajectory of the aircraft as a function of said reference trajectory, computing a plurality of accessibility zones, at least one of said accessibility zones having an intersection with said reference trajectory, said accessibility zones having an associated accessibility level, between at least two accessibility levels so as to define accessible zones and non-accessible zones for a current mission phase, the accessibility zones having a visual characteristic linked with the accessibility level, the accessibility level being defined as a function of the current mission phase and at least two flight constraints associated with the current mission phase, said constraints associated with the current mission phase comprising at least one mandatory constraint and at least one relative constraint associated with the current mission phase,
- displaying (64), on a module of the operator terminal, the reference trajectory, a current position of the aircraft and said accessibility zones.

9. The method according to claim 8, wherein the calculation of accessibility zones comprises the following steps:
- computing (56) a three-dimensional envelope of the predicted trajectory, and obtaining a plurality of nodes representative of said envelope,
- for each node, obtaining (58) a plurality of associated constraints, as a function of the current mission phase, and calculating (60) an accessibility level by a sum weighted by weight coefficients associated with said constraints, at least part of the weight coefficients depending on the current mission phase.

10. The method according to claim 9, further including a step for emitting an alert (66) if said envelope contains a node whose calculated accessibility level is below a predetermined threshold.

11. The method according to claim 10, wherein the alert emission (66) includes a display on the display module of an alert indicator and of information relative to at least one constraint applicable to said node.
